Europäisches Patentamt

European Patent Office

Office européen des brevets

(11) Publication number: **0 341 438**
**A2**

## EUROPEAN PATENT APPLICATION

(21) Application number: **89106444.6**

(22) Date of filing: **11.04.89**

(51) Int. Cl.⁴ **G01F 23/14 , G01N 35/06**

(30) Priority: **13.05.88 US 194675**

(43) Date of publication of application:
**15.11.89 Bulletin 89/46**

(84) Designated Contracting States:
**AT BE CH DE ES FR GB IT LI NL**

(71) Applicant: **ABBOTT LABORATORIES**
**One Abbott Park Road**
**Abbott Park, IL 60064-3500(US)**

(72) Inventor: **Hollar, Robert C.**
**33106 Sears Blvd.**
**Wildwood Illinois 60030(US)**
Inventor: **Pepe, Curtis J.**
**3609 W. Cornell Court**
**McHenry Illinois 60050(US)**
Inventor: **Genger, Kevin R.**
**6934 N. Hamilton**
**Chicago Illinois 60645(US)**

(74) Representative: **Modiano, Guido et al**
**MODIANO, JOSIF, PISANTY & STAUB**
**Modiano & Associati Via Meravigli, 16**
**I-20123 Milan(IT)**

(54) **Pneumatic sensing system.**

(57) For use in testing a large volume of blood samples, portions of which are to be aspirated and then dispensed into one or more reaction wells, a pneumatic sensing system is characterized by an air pressure/vacuum source which is automatically coupled to a disposable pipette tip when the tip is picked up by a programmed gantry to provide a low pressure air flow through the pipette tip as it approaches the surface of the sample to be aspirated. A back pressure developed in the system as the pipette tip closely approaches and contacts the surface of the sample is detected by a pressure transducer which feeds the detected data to the gantry controller which instantaneously raises the pipette tip for purging and then moves it downwardly into the sample a distance equal to the sensed surface level plus a constant distance appropriate for the amount of the sample to be aspirated. Verification of the integrity of the system during both aspiration and dispensing of the samples is provided by the pressure transducer and the controller with a display screen of the controller providing a visual indicator.

Fig. 2

## PNEUMATIC SENSING SYSTEM

### BACKGROUND OF THE INVENTION

It is known that the level of a conductive fluid in a container may be sensed by measuring a change in capacitance or conductance upon contact therewith by a suitable sensing means. In a capacitive level sensing system, a conductive pipette tip is used in combination with a conductive base plate which is required below the fluid container. In a conductive level sensing system, a pair of electrodes, one of which may be a pipette, is brought into contact with the liquid. Both systems are operable only with conductive liquids and require very sensitive electronics as the electrical signals which must be detected are very small and are sensitive to extraneous electronic noise. Further, inaccuracies may occur as a result of poor conduction caused by the build up of deposits of protein, salts and other contaminants on the conductive sensing members which, for economical reasons, must be used and reused for the testing of more than a single sample. Further, use of the same tip for multiple samples in capacitive and conductive systems may result in carryover problems and possible sample contamination.

Another problem with capacitive and conductive systems is possible inaccuracy resulting in false determinations in level sensing should there be bubbles on the surface of the body of the liquid sample whose level is to be sensed. In the capacitive system, the change in capacitance resulting from contact with such surface bubbles is so similar to the change in capacitance from contact with the true liquid surface that the system cannot differentiate therebetween. The conductive system is also vulnerable to falsely interpreting conductance caused by bubbles on or near the surface of a liquid sample as the true liquid surface.

Furthermore, monitoring of liquid transfer operations, as in a high volume blood testing operation, is very difficult with either conductive or capacitive systems. Electrically monitored systems typically lack flexibility and are limited in their error detection capabilities. In many cases, true error detection for either liquid aspiration or dispensing operations is impossible utilizing current techniques.

### SUMMARY OF THE INVENTION

The present invention is directed to a pneumatic system for use in medical testing and diagnostic equipment for sensing (1) the presence of a liquid sample in a container such as a sample tube, (2) the surface level of such a liquid sample, and (3) errors which occur in subsequent liquid transfer operations. A source of compressed air slowly pushes air through a length of tubing past a very sensitive pressure transducer and through a sample collecting pipette tip. As the surface of the liquid sample is closely approached and contacted a slight back-pressure is developed in the pipette tip and the tubing, which minute variations are sensed by the pressure transducer whereby to determine the sample's surface level and thereby control the further movement of the sample collecting pipette, the back pressure being a function of the volume and velocity of the air being pushed through the pipette tip. The pneumatic sensing system disclosed herein is adapted to use standard, low cost pipette tips which are disposable after each use whereby the "build-up of deposits" problem and the "contaminant carry-over" problem of the capacitive and conductive sensing systems are moot and of no concern. Further, the false level sensing determinations of the capacitive and conductive systems due to surface bubbles are also avoided with applicants' pneumatic system as the air flow is not sensitive to surface bubbles or foam. It is noted also that applicants' pneumatic sensing system may be used with non conductive liquid samples, even distilled water, whereas the capacitive and conductive systems are usable only with conductive liquid samples.

Applicants' system also provides for verification of both aspirated and dispensed sample integrity by providing instantaneous visual or other indication of any pressure leaks in the system and also of any sample non homogeneity which could be caused by clots, bubbles or the like in the sample whereupon such sample may be aborted immediately. This is accomplished by monitoring pressure/vacuum as a function of time as liquid samples are aspirated and/or dispensed for comparison to predetermined standards. Any anomalies detected indicate a potential pipetting error.

The present invention is directed to a new and improved pneumatic system for detecting the presence of and the surface level of a liquid sample, a predetermined amount of which is to be aspirated, and subsequent monitoring of liquid transfer operations.

An object of the present invention is to provide such a new and improved pneumatic system having aspirating means in the form of a pipette tip which is movable toward and away from the liquid sample, means associated with the aspirating means for pneumatically sensing the surface level of the sample upon downward movement of the pipette tip theretoward, and means responsive to the surface level being sensed for moving the pipette tip into the liquid sample a distance which is appropriate for the amount of the liquid to be aspirated.

Another object of the present invention is to provide such a new and improved system having a two way air supply means connected to the pipette tip and a pressure transducer associated therewith for detecting back pressure developed in the system as the pipette tip closely approaches and contacts the surface of the liquid sample.

A further object of the present invention is to provide a new and improved method for the monitoring of subsequent liquid transfer operations and the detection of any liquid transfer errors which may occur.

A still further object of the present invention is to provide such a system which may be used, for instance, in high volume screening operations in blood banks and plasma centers or in high volume infectious disease blood testing. As many as 700 test results may be provided per hour if, for example, seven separate tests were required on the blood samples of 100 patients or donors.

BRIEF DESCRIPTION OF THE DRAWINGS

FIG. 1 is a diagramatic view of a testing operation utilizing the pneumatic sensing system of the present invention including a traveling gantry, a supply of disposable pipette tips (Stage I), samples to be tested (Stage II), a reagent cuvette (Stage III), and a pipette tip disposal container (Stage IV);

FIG. 2 is a diagramatic view of the pneumatic sensing system of the present invention;

FIG. 3 is a diagramatic view at Stage II of FIG. 1 as a pipette tip is about to sense the surface level of a liquid sample;

FIGS. 3(a), 3(b) and 3(c) are successive diagramatic views of the surface level of the sample of Fig. 3 being sensed prior to aspiration thereof; and

FIGS. 4(a) and 4(b) are graphs developed as the surface levels of two samples are being sensed, as in FIGS. 2 and 3(a); and

FIGS. 4(c), 4(d), 4(e) and 4(f) are graphs developed during normal and abnormal aspiration and dispensing of samples.

DESCRIPTION OF THE PREFERRED EMBODIMENT

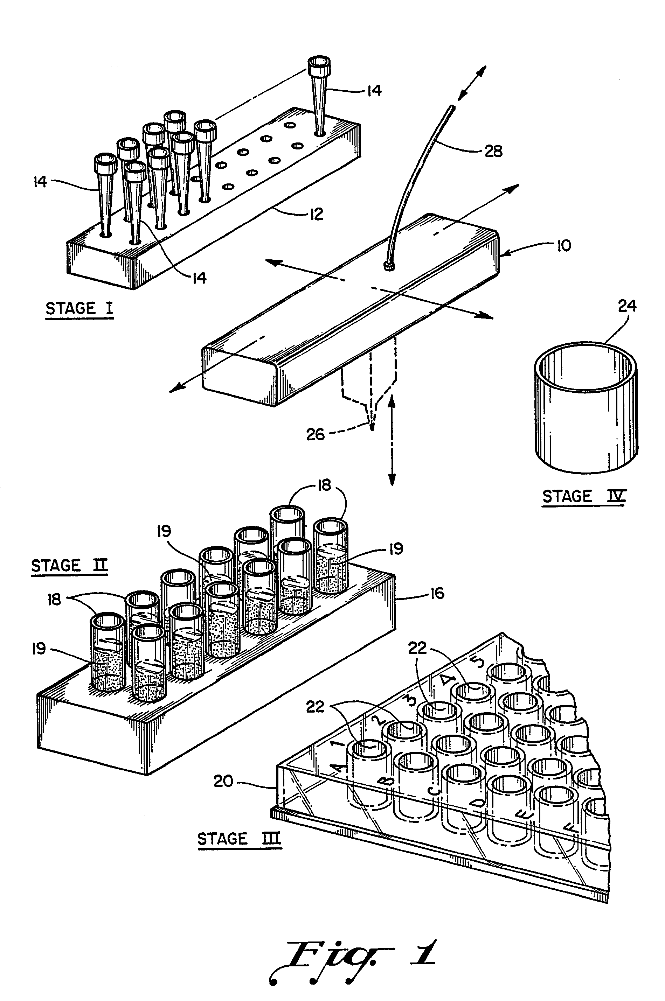

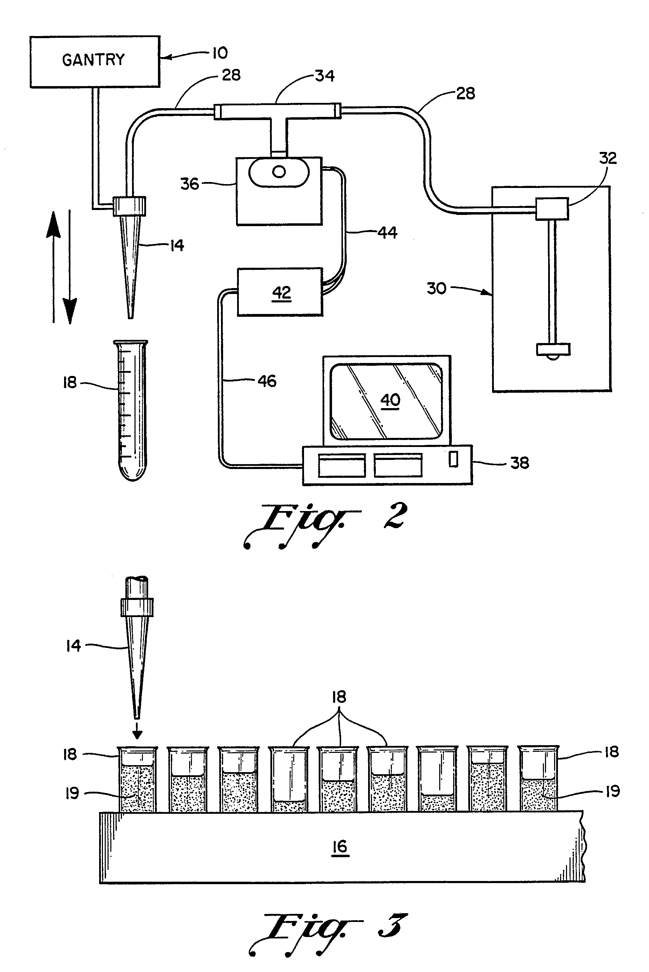

Referring now to the drawings, FIG. 1 is a diagramatic view of a testing operation utilizing the pneumatic sensing system of the present invention, which testing operation includes a traveling gantry 10 of a known type having not only two axis movement in a horizontal plane providing universal movement between four different operational stages (Stages I, II, III, and IV) but also vertical movement downward toward and upward away from said stages. Stage I comprises a tray 12 containing a supply of disposable pipette tips 14 which may be of a low cost commercially available standard type; Stage II comprises a tray 16 in which a plurality of tubes or containers 18 filled to varying levels with samples to be tested, such as blood, are supported; Stage III comprises an assay tray 20 which is characterized by a series of reaction wells 22 containing one or more reagents for each sample and into which portions of the samples from Stage II are to be dispensed; and Stage IV comprises a container 24 into which the used pipette tips 14 are deposited for disposal. The gantry 10, which may be an Asymtek Automove Model 201, also includes a suitable robot pick-up apparatus 26 which is adapted for gripping and picking up one of the pipette tips 14 at Stage I and retaining same in its grip during movement thereof from Stage I to Stage II and then to Stage III and finally to Stage IV where the used pipette tip 14 is released for deposit in the container 24. A plastic tubing 28, which preferably has a diameter of .030 inches, extends from a two-way pneumatic source 30, such as a Hamilton Micro-Lab M syringe pump 32 (FIG. 2), to the gantry 10 where it is automatically sealingly coupled to the open upper end of one of the pipette tips 14 in a suitable known manner as the pipette tip 14 is gripped by the robot pick up apparatus 26. As the specific electrical and/or electronic circuitry for controlling the movement of the gantry 10 and the robot pick-up 26 comprises no part of the present invention, same is neither shown in FIGS. 1 and 2 nor described herein.

A preferred embodiment of the pressure sensing system of the present invention, as best illustrated in FIG. 2, is characterized by the gantry 10 which is adapted for gripping, picking up, and transporting one of the disposable pipette tips 14, each pipette tip 14 being automatically and sealingly connected to the two-way pneumatic source 30 through the tubing 28, which tubing 28 is connected intermediate the gantry 10 and the pneumatic source 30 to two ports of a three-way T-connector or fitting 34 which has a sensitive pressure transducer 36 connected to its third port, which transducer 36 may be housed in a Sensym Eval. Kit Model SCX-E1. The pressure sensing system is further characterized by a monitor or controller 38 which collects data and runs the desired testing program and which has a video display screen 40. A suitable controller 38 for this system would be an IBM PC/XT having a Metra-Byte-DASH8 A/D (analog to digital converter) installed therein. The controller 38 and the transducer 36 are interconnected by a suitable interface 42, such as a Metra-Byte EXP-16 Mux. The transducer 36 is electronically connected to the interface 42 in a suitable known manner, as at 44 in FIG. 2, and the interface 42 is electronically connected to the controller 38 in a suitable known manner, as at 46 in FIG. 2. Although not shown in the drawings, the controller 38 is interconnected with both the gantry 10 and the syringe pump 32 by suitable known serial communication links, such as an RS-232C, in order to control the operations thereof.

A representative cycle or sequence of steps in a testing operation such as is illustrated in FIG. 1 and which incorporates a pneumatic sensing system embodying the present invention, illustrated in FIG. 2, will now be described. The testing operation would most likely be one involving high volume screening for infectious diseases and/or high volume blood typing, as in blood banks and plasma centers. For instance, the pneumatic sensing system disclosed herein would permit the performance of seven separate tests on blood samples from 100 different patients per hour, or 700 test results per hour.

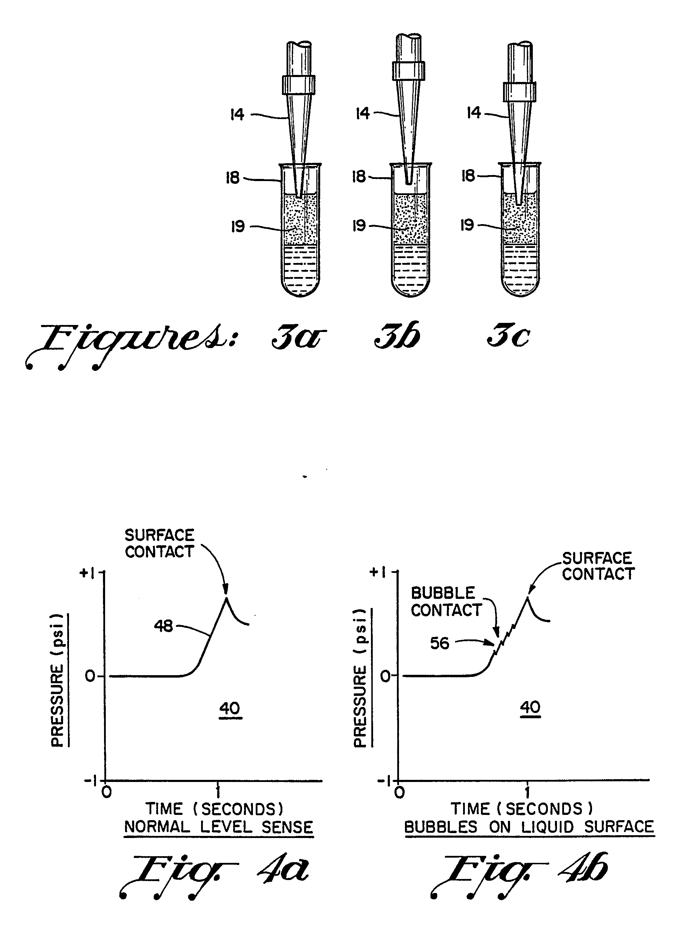

First, the controller 38 directs the gantry 10 to move to a Stage I predetermined position above the tray 12 of new and unused pipette tips 14 and simultaneously directs the syringe pump 32 to pull in air from atmosphere, the system not being a closed system. The gantry 10 is then directed to move downwardly so that the robot pick-up 26 thereon can sealingly engage and grip one of the pipette tips 14. The gantry 10 is then directed to move upwardly and then horizontally to a Stage II predetermined position above the sample tray 16 and specifically over one of the sample tubes 18, as illustrated in FIG. 3. The controller 38 then directs the syringe pump 32 to slowly push air through the tubing 28, past the pressure transducer 36, and out the pipette tip 14 simultaneously as the gantry 10 is directed to move downwardly toward the sample tube 18. The syringe pump 32 provides a source of constant even pressure. As the pipette tip 14 closely approaches and engages the surface of a sample 19 (FIG. 3a), a slight back pressure is developed in the tubing 28 which is detected or sensed by the pressure transducer 36, which pressure change is fed to the controller 38 through the interface 42, whereupon the gantry 10 is instantaneously directed to move the pipette tip 14 upwardly (FIG. 3b) and the syringe pump 32 is directed to purge all remaining air from the system, after which the controller 38 directs the gantry 10 to move the pipette tip 14 downwardly into the sample 19 a distance equal to the sensed surface level for that particular sample 19 plus a predetermined constant distance which is appropriate for the amount of each sample to be aspirated (FIG. 3c). The syringe pump 32 is then directed to provide a sufficient vacuum to aspirate a predetermined volume of the sample 19 into the pipette tip 14.

The gantry 10 is then directed by the controller 38 to move upwardly and horizontally to a Stage III predetermined position above the assay tray 20 where predetermined portions of the aspirated sample are dispensed into as many of the reaction wells 22 for the number of tests to be run thereon, the syringe pump 32 automatically providing the necessary vacuum release or reduction for such dispensing. The gantry 10 is then directed to move to a Stage IV position above the container 24 where the used pipette tip 14 is released by the robot pick-up 26 with the used tip 14 being deposited in the container 24 for disposal. The cycle is then repeated until all the samples 19 have been tested.

Should an empty sample tube or one with too small a sample volume for testing be inadvertently included in the sample tray 16, the controller 38 is programmed so that after the pipette tip 14 has been lowered a predetermined distance without sensing the presence of a sample, that sample test would be automatically aborted and the gantry 10 would move the pipette tip 14 upwardly and on to the next sample tube 18.

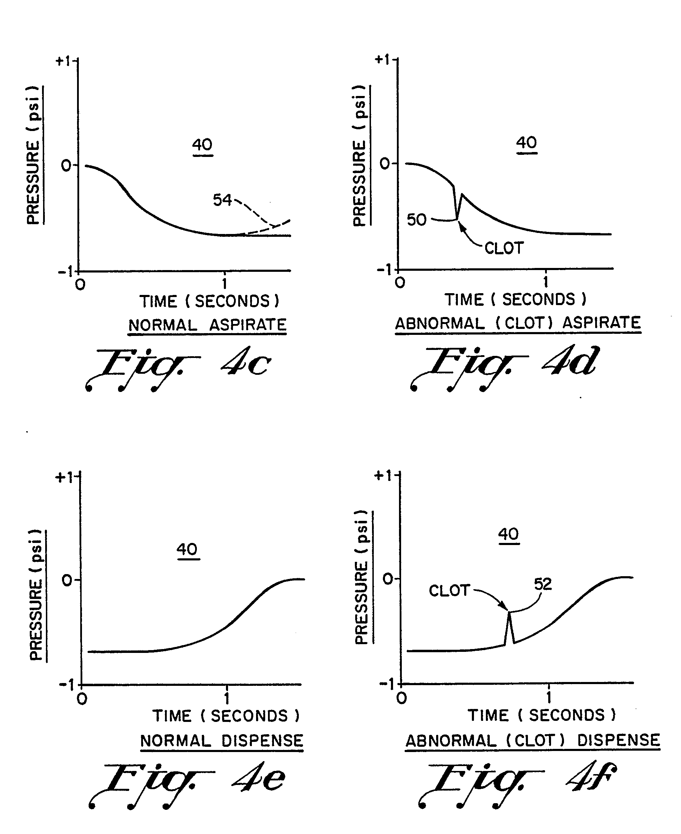

As illustrated in FIGS. 4(a), 4(c) and 4(e), the display screen 40 of the controller or monitor 38 provides a visual recording of the system's detection operation and thus provides visual verification of the integrity of the system from normal aspiration of the samples through normal dispensing thereof. The development of back pressure as the pipette tip 14, through which air is being pushed, closely approaches and engages the surface of a sample 19 is indicated at 48 in FIG. 4(a). Should the portion of a particular sample being either aspirated, FIG. 4(d), or dispensed, FIG. 4(f), have clots or internal bubbles, such sample non homogeneity would instantaneously be shown on the display screen 40 by a major spike, as shown at 50 and 52 in FIGS. 4(d) and 4(f), respectively. That sample could then be aborted or rerun. Further, should the system develop a leak during aspiration, such leakage would result in a loss of negative pressure or vacuum which would instantaneously be detected by the transducer/controller 36, 38 and which would be shown on the screen 40 as indicated by the broken line 54 in FIG. 4(c).

Unlike the capacitive or conductive level sensing systems currently in use, the pneumatic sensing system of the present invention will not result in false surface level determinations because of the presence of surface bubbles or foam on certain samples. The presence of bubbles on the surface of a sample whose surface level is to be sensed is indicated in FIG. 4(b) by a series of mini-spikes 56. Such surface bubbles would result in a false level indication in either the capacitative or conductive systems but not in the pneumatic system disclosed herein.

While there has been shown and described a preferred embodiment of the invention, it will be obvious to those skilled in the art that changes and modifications may be made without departing from the invention, and it is intended by the appended claims to cover all such changes and modifications as fall within the true spirit and scope of the invention. Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. A system for automatically sensing the presence of a surface level of a body of liquid, a predetermined amount of which is to be aspirated, said system comprising, aspirating means movable toward and away from said body of liquid, means associated with said aspirating means for pneumatically sensing the surface level of said body of liquid upon downward movement of said aspirating means theretoward, and means responsive to said surface level being sensed for moving said aspirating means into said body of liquid a distance which is appropriate for the amount of said liquid to be aspirated.

2. A system as recited in Claim 1 wherein said aspirating means comprises a pipette tip and wherein said pneumatic sensing means comprises a two way air supply means operably connected to said pipette tip and adapted to provide a low pressure air flow therethrough during movement of said pipette tip toward said body of liquid, and a pressure transducer associated with said air supply means and adapted to detect a back pressure developed therein as said pipette tip closely approaches the surface of said body of liquid.

3. A system as recited in Claim 2 wherein said responsive means comprises a controller interfaced with said pressure transducer and adapted to control both the movement of said pipette tip and the operation of said air supply means.

4. A system as recited in Claim 3 wherein said interfaced transducer and controller are adapted to detect any anomalies in the system during aspiration of said liquid and wherein said controller has a display screen associated therewith which provides visual means for verifying the integrity of said system.

5. In an apparatus for automatically sensing the presence of a body of liquid and for aspirating a desired portion of said liquid, a pneumatic level sensing system comprising, pipette means, means for moving said pipette means in a vertical direction toward and away from said body of liquid, a two-way air supply/vacuum means operably connected to said pipette means and adapted to automatically provide a low-pressure air flow through said pipette means during initial downward movement of said pipette means toward the surface of said body of liquid, and a pressure transducer/controller associated with both said air supply/vacuum means and said pipette moving means and adapted, in response to the development of a back pressure in said air supply/vacuum means as a result of the surface of said body of liquid being closely approached by said downwardly moving pipette means, to automatically and simultaneously direct said pipette moving means to raise said pipette means and direct said air supply/vacuum means to purge the remaining air from said pipette means and then to automatically direct said pipette moving means to lower said pipette means a distance equal to the sensed surface level of said body of liquid plus a predetermined distance into said body of liquid which is appropriate for the amount of said liquid to be aspirated and then to automatically direct said air supply/vacuum means to develop a vacuum whereupon a desired amount of said liquid is aspirated into said pipette means.

6. A system as recited in Claim 5 wherein said pressure transducer/controller has a display screen associated therewith which provides an instantaneous visual indication of any problems developed in the system such as leakage or the presence of clots or bubbles within the portion of the liquid being aspirated whereby integrity of said system is verifiable.

7. A system as recited in Claim 5 wherein said two-way air supply/vacuum means comprises a syringe pump.

8. In a blood testing apparatus of the type having a plurality of open-topped tubes of blood samples to be tested;

an assay tray having a plurality of reaction wells into which portions of the blood samples are to be dispensed;

a supply of pipette tips; and

a gantry movable to a first position to pick up one of said pipette tips, to a second position over one of said tubes of blood samples, to a third position over said assay tray, and to a fourth pipette-tip-disposal position;

said gantry having vertical and horizontal movement means for picking up said pipette tips, for bringing said pipette tips into aspiration relationship with said blood samples despite variations in the surface levels thereof, and for dispensing said aspirated blood samples into said assay tray wells; a pneumatic system for sensing the presence of and controlling the aspiration of a blood sample by one of said pipette tips when said gantry is in said second position over one of said blood sample tubes and for dispensing said aspirated sample into one or more of said reaction wells when said gantry is in said third position over said assay tray; said system comprising, a two-way air supply means adapted to provide a low-pressure air flow through each pipette tip during initial downward movement thereof toward the blood sample in the tube over which said pipette tip is vertically aligned. control means for both said gantry movement means and said two-way air supply means, and a pressure transducer associated with said air supply means and interfaced with said control means and adapted to detect a back pressure resulting from the surface of the blood sample in said tube being closely approached by said downwardly moving pipette tip whereupon said gantry movement control means automatically raises said pipette tip simultaneously as said air supply means automatically purges the remaining air therefrom after which said pipette tip is automatically lowered by said gantry movement control means into said blood sample a distance equal to the sensed surface level for that particular blood sample plus a predetermined constant distance appropriate for the amount of each sample to be aspirated for the desired tests after which a desired portion of said sample is automatically aspirated into said pipette tip by a vacuum automatically developed in said pipette tip by said two-way air supply means.

9. A pneumatic sensing system as recited in Claim 8 wherein said two-way air supply means comprises a syringe pump.

10. A system as recited in Claim 8 wherein, when said gantry is in said third position over said assay tray, said control means directs said two way air supply means to reduce said aspirating vacuum to permit dispensing of said aspirated sample into one or more of said reaction wells.

11. A system as recited in Claim 10 wherein said interfaced pressure transducer and control means are adapted to detect any abnormalities in the system during sample aspiration and dispensing thereof, such as leakage or the presence of blood clots or the like in the sample being aspirated and/or dispensed, whereby to provide verification of the integrity of the system.

12. A system as recited in Claim 11 wherein said control means has a display screen associated therewith permitting visual verification of the integrity of said system.

STAGE I

STAGE II

STAGE III

STAGE IV

*Fig. 1*

Fig. 2

Fig. 3

14
18
19

Figures: 3a    3b    3c

SURFACE
CONTACT

+1

PRESSURE (psi)

48

0

40

-1

0                    1
TIME (SECONDS)
NORMAL LEVEL SENSE

Fig. 4a

SURFACE
CONTACT

+1

PRESSURE (psi)

BUBBLE
CONTACT

56

0

40

-1

0                    1
TIME (SECONDS)
BUBBLES ON LIQUID SURFACE

Fig. 4b

NORMAL ASPIRATE

*Fig. 4c*

ABNORMAL (CLOT) ASPIRATE

*Fig. 4d*

NORMAL DISPENSE

*Fig. 4e*

ABNORMAL (CLOT) DISPENSE

*Fig. 4f*